# EUROPEAN PATENT SPECIFICATION

(11) **EP 1 552 980 B1**
(45) Date of publication and mention of the grant of the patent: **09.07.2008**
(21) Application number: 04000221.4
(22) Date of filing: 08.01.2004
(51) Int. Cl.: B60N 2/28

(54) **Connecting device for connecting a child seat releasably to a retaining ring**
Verbinder zum abnehmbaren Befestigen eines Kindersitzes an einem Haltering
Dispositif de fixation pour relier de façon amovible un siège pour enfant à un anneau d'ancrage

(43) Date of publication of application: 13.07.2005
(73) Proprietor: Wonderland Nurserygoods Co., Ltd., Taipei 114 (TW)
(72) Inventor: Chen, Shun-Min, Neihu Taipei (TW)
(74) Representative: Altenburg, Udo

(56) References cited:
- WO-A-03/010024
- US-A- 3 540 091

## Description

This invention relates to a connecting device for connecting a child seat releasably to a vehicle seat, and more particularly to a connecting device for connecting a child seat releasably to a retaining ring on a vehicle seat.

EP0943487 discloses a connecting device for connecting a child seat releasably to a retaining ring on a vehicle. Although the connecting device can hold a child seat temporarily and effectively on a retaining ring, the structure of the connecting device is relatively complex. Furthermore, the operation of the connecting device is relatively troublesome.

WO 03/010024 discloses a coupling to attach a device such as an infant seat to an anchor member. One version of the coupling is characterized by a frame having a mouth with a seat configured to receive the anchor member and a lever movably mounted on the frame to hold the anchor member inside the mouth. The lever has a downwardly projecting finger that blocks the mouth of the notch in the closed position and allows access to the notch when moved to the open position. The coupling may include a stop member to resist movement from the closed to the open position. The coupling also may include a web adjuster or other connecting device operatively disposed between the coupling and the device.

Therefore, the object of this invention is to provide a connecting device for connecting a child seat releasably to a retaining ring, which has a simple structure and which can be operated easily.

This object is achieved according to the invention by a connecting device as defined in claim 1. Advantageous embodiments of the invention are defined in dependent claims 2 to 7.

According to this invention, a connecting device for connecting a child seat releasably to a retaining ring includes a main body connected fixedly to the child seat, and a retaining member disposed rotatably in the main body. The retaining ring has an insert portion inserted into two aligned slide slots in an open end of a tubular portion of the main body. The retaining member is biased by a biasing unit to a retaining position, where two retaining hooks of the retaining member are aligned with the slide slots so as to confine the insert portion of the retaining ring within the slide slots. During assembly, when the insert portion of the retaining ring is inserted into the slide slots, it pushes the retaining hooks away from alignment with the slide slots. When the insert portion of the retaining ring passes through the retaining hooks within the slide slots, the biasing unit rotates the retaining member to the retaining position.

These and other features and advantages of this invention will become apparent in the following detailed description of a preferred embodiment of this invention, with reference to the accompanying drawings, in which:
Fig. 1 is a schematic side view of a child seat and a connecting mechanism that consists of two connecting devices of this invention;
Fig. 2 is an exploded perspective view of the connecting mechanism;
Fig. 3 is a sectional view of the connecting device of this invention taken along Line III-III in Fig. 2; and
Figs. 4, 5, and 6 illustrate the operation of the connecting device.

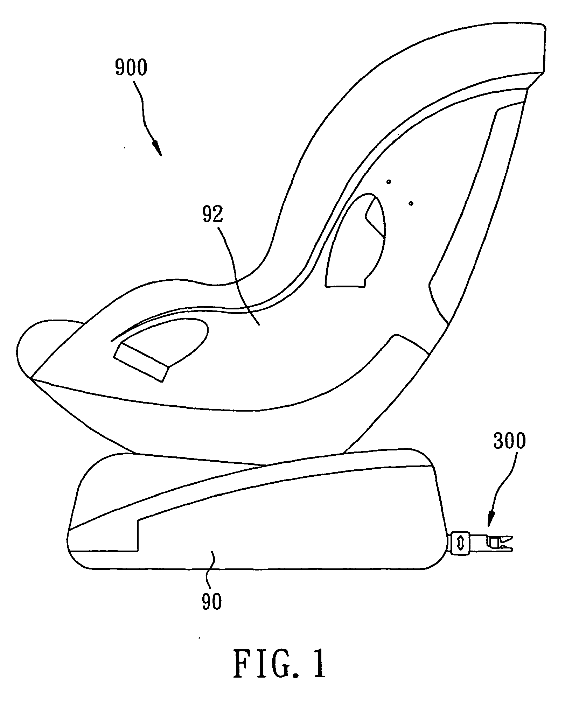

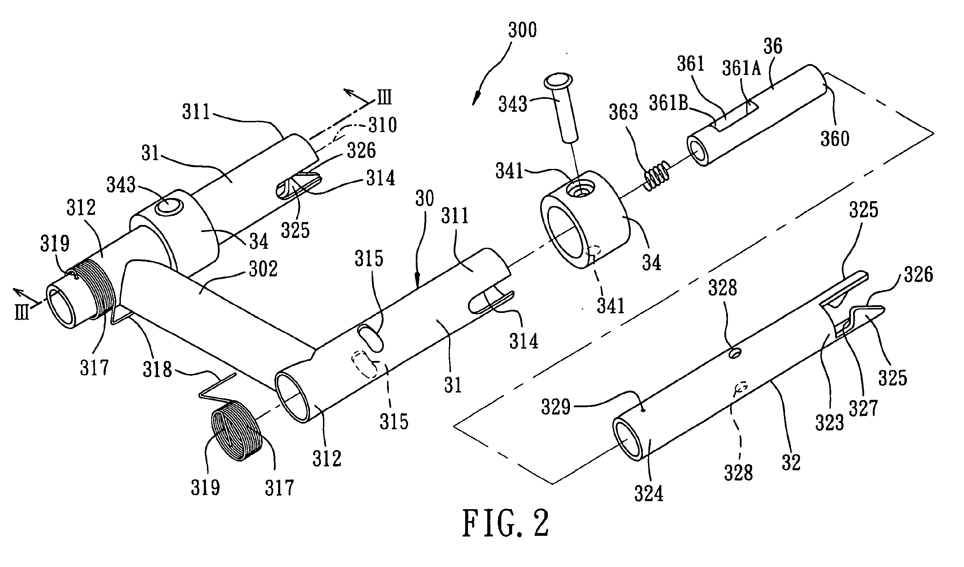

Referring to Figs. 1 and 2, a child seat 900 is shown to include a base 90, a seat body 92 fixed on the base 90, and a connecting mechanism that consists of two connecting devices 300 (only one is shown) of this invention, which have a common main body 30. The main body 30 is mounted fixedly to the base 90, is U-shaped, and includes two tubular portions 31 and a transverse rod 302. Each of the tubular portions 31 has open first and second ends 311, 312 that are opposite to each other. The transverse rod 302 has two ends that are formed respectively and integrally with the second ends 312 of the tubular portions 31.

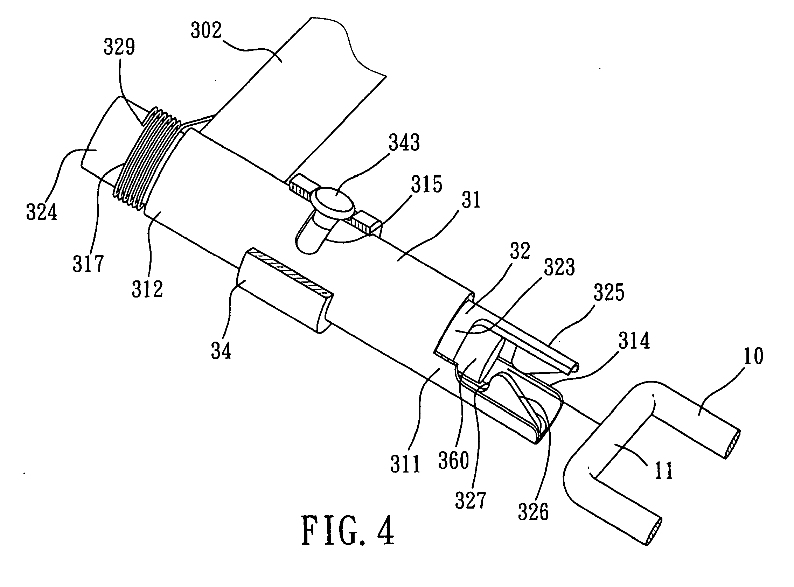

The connecting devices 300 are connected respectively and removably to insert portions 11 (only one is shown in Fig. 4) of two retaining rings 10 (only one is shown in Fig. 4) , which are fastened to a vehicle seat (not shown).

Because the connecting devices 300 are similar in construction, as shown in Fig. 2, only one is described in the succeeding paragraphs.

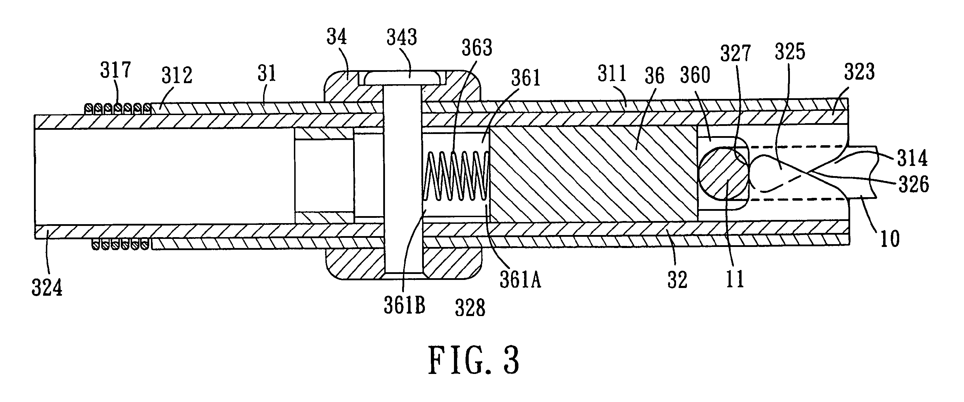

Referring to Figs. 2 and 3, the connecting device 300 includes one of the tubular portions 31, a rotatable retaining member 32, a rotary ring 34, a fastener rod 343, a movable cylindrical pressing member 36, a coiled compression spring 363, and a biasing unit 317.

The tubular portion 31 is configured as a circular tube. The first end 311 of the tubular portion 31 is formed with two aligned slide slots 314, each of which has a closed end and an open end. The insert portion 11 of the retaining ring 10 is disposed within the slide slots 314 in the tubular portion 31, and is adjacent to the closed ends of the slide slots 314. Two aligned limiting slots 315 are formed through a wall of the tubular portion 31, and is disposed between the first and second ends 311, 312 of the tubular portion 31. Each of the limiting slots 315 extends along a circumferential direction of the tubular portion 31, and has two closed ends.

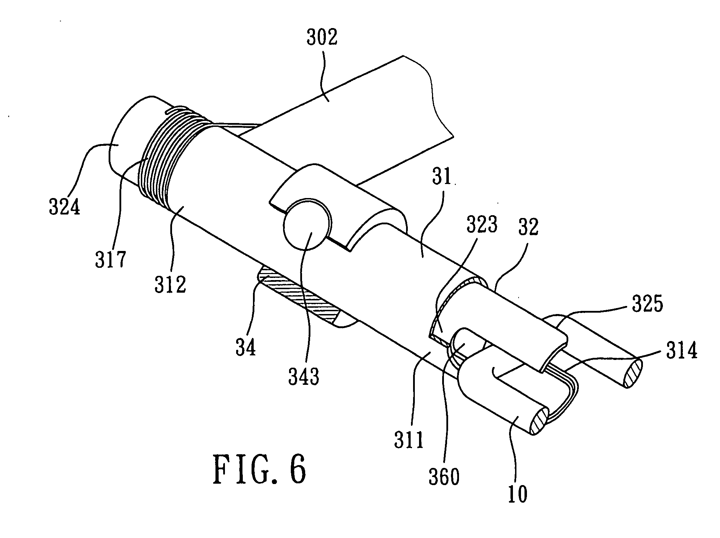

The rotatable retaining member 32 is also configured as a circular tube, extends through and is disposed rotatably within the tubular portion 31 of the main body 30, and has a first end 323 that is formed with two integral retaining hooks 325, and a second end 324 that is opposite to the first end 323 and that projects outwardly of the second end 312 of the tubular portion 31 of the main body 30. The first end 323 of each of retaining hooks 325 is formed with an inclined guiding surface 326 that is proximate to the open end of the corresponding slide slot 314 in the main body 30, and a stop surface 327 that is proximate to the closed end of the corresponding slide slot 314 in the main body 30, that is connected to an end of the inclined guiding surface 326, and that extends in a transverse direction of the tubular portion 31 of the main body 30. The retaining member 32 is biased by the biasing unit 317 to a retaining position as shown in Figs. 3 and 6, where the retaining hooks 325 are aligned with the slide slots 314 in the main body 30. As such, the insert portion 11 of the retaining ring 10 is confined within the closed ends of the slide slots 314 in the main body 30 by the stop surfaces 327 of the retaining hooks 325 of the retaining member 32.

The movable cylindrical pressing member 36 is disposed movably within the retaining member 32, and has a pressing end 360 that is adjacent to the stop surfaces 327 of the retaining hooks 325 of the retaining member 32, and a spring-receiving groove 361 formed through the pressing member 36.

The rotary ring 34 is sleeved rotatably around the tubular portion 31 of the main body 30, and has two aligned counterbores 341.

The fastener rod 343 is configured as a rivet, extends through the counterbores 341 in the rotary ring 34, two aligned holes 328 in an intermediate portion of the retaining member 32, the limiting slots 315 in the tubular portion 31 of the main body 30, and the spring-receiving groove 361 in the pressing member 36. Two ends of the fastener rod 343 are connected respectively and fixedly to the rotary ring 34 and the retaining member 32 so that the rotary ring 34 is connected fixedly to the retaining member 32 by the fastener rod 343. The spring-receiving groove 361 extends in an axial direction of the pressing member 36, and has a first end (361A) proximate to the pressing end 360, and a second end (361B) distal from the pressing end 360.

The coiled compression spring 363 is disposed within the spring-receiving groove 361 in the pressing member 36 between the fastener rod 343 and the wall of the pressing member 36 defining the first end (361A) of the spring-receiving groove 361 in the pressing member 36. As such, the pressing end 360 of the pressing member 36 presses the insert portion 11 of the retaining ring 10 against the stop surfaces 327 of the retaining hooks 325 of the retaining member 32.

The biasing unit 317 is configured as a coiled torsional spring, and has a first end 318 abutting against the transverse rod 302, and a second end 319 inserted into a radial hole 329 in the retaining member 32 so as to be fastened to the retaining member 32, thereby biasing the retaining member 32 to the retaining position.

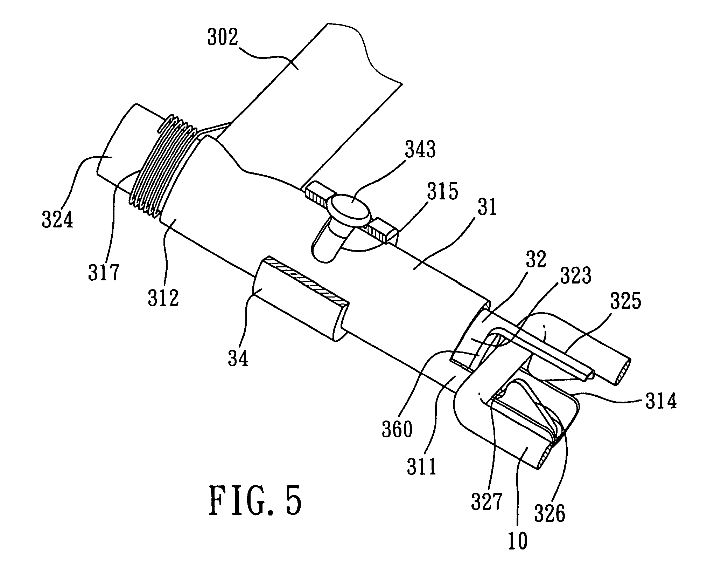

During assembly, when the insert portion 11 of the retaining ring 10 is inserted into the slide slots 314 in the main body 30, as shown in Fig. 4, it contacts and pushes the inclined guiding surfaces 326 of the retaining hooks 325 of the retaining member 32 against the biasing action of the biasing unit 317 to rotate the retaining member 32 to a release position, where the retaining hooks 325 of the retaining member 32 are removed from alignment with the slide slots 314 in the main body 30. Subsequently, the insert portion 11 of the retaining ring 10 passes through the retaining hooks 325 so as to move to the closed ends of the slide slots 314 in the main body 30, as shown in Fig. 5. At this time, the biasing unit 317 rotates the retaining member 32 back to the retaining position, as shown in Fig. 6, so as to confine the insert portion 11 of the retaining ring 10 within the slide slots 314 in the main body 30.

When the retaining member 32 is disposed at the retaining position, the fastener rod 343 is disposed at one end of each of the limiting slots 315 in the main body 30. When the retaining member 32 is disposed at the release position, the fastener rod 343 is disposed at the other end of each of the limiting slots 315 in the main body 30.

## Claims

1. A connecting device (300) mounted to a child seat (900) and connected removably to an insert portion (11) of a retaining ring (10), the connecting device (300) being **characterized by**:
a main body (30) mounted fixedly to the child seat (900) and including a tubular portion (31) that has an open first end (311) that is formed with two aligned slide slots (314), each of which has a closed end and an open end, the insert portion (11) of the retaining ring (10) being disposed within the slide slots (314) in the main body (30) and adjacent to the closed ends of the slide slots (314)in the main body (30);
a rotatable retaining member (32) disposed rotatably in the main body (30) and having two integral retaining hooks (325), each of which is formed with an inclined guiding surface (326) proximate to the open end of a corresponding one of the slide slots (314) in the main body (30), and a stop surface (327) proximate to the closed end of the corresponding one of the slide slots (314) in the main body (30), the retaining member (32) being disposed at a retaining position, where the retaining hooks (325) are aligned with the slide slots (314) in the main body (30) such that the insert portion (11) of the retaining ring (10) is confined within the closed ends of the slide slots (314) by the stop surfaces (327) of the retaining hooks (325) of the retaining member (32), the retaining member (32) being rotatable relative to the main body (30) to a release position, where the retaining hooks (325) of the retaining member (32) are removed from alignment with the slide slots (314) in the main body (30) so as to permit the insert portion (11) of the retaining ring (10) to pass through the retaining hooks (325) of the retaining member (32) within the slide slots (314) in the main body (30) ; and
a biasing unit (317) for biasing the retaining member (32) to the retaining position, the insert portion (11) of the retaining ring (10) contacting and pushing the inclined guiding surfaces (326) of the retaining hooks (325) against the biasing action of the biasing unit (317) to thereby move the retaining member (32) to the release position when the insert portion (11) is inserted into the slide slots (314) in the main body (30), after which the biasing unit (317) rotates the retaining member (32) to the retaining position so as to confine the insert portion (11) of the retaining ring (10) within the closed ends of the slide slots (314) of the tubular portion (31) of the main body (30).

2. The connecting device (300) as claimed in Claim 1, **characterized in that** each of the tubular portion (31) of the main body (30) and the retaining member (32) is shaped as a circular tube, the retaining member (32) being disposed within the tubular portion (31) of the main body (30).

3. The connecting device (300) as claimed in Claim 2, further **characterized in that** the tubular portion (31) of the main body (30) is formed with two aligned limiting slots (315), each of the limiting slots (315) extending along a circumferential direction of the tubular portion (31) of the main body (30) and having two closed ends, the connecting device (300) further including a rotary ring (34) that is sleeved rotatably around the tubular portion (31) of the main body (30), and a fastener rod (343) extending through the limiting slot (315) in the tubular portion (31) of the main body (30) and having two ends that are connected respectively and fixedly to the rotary ring (34) and the retaining member (32), the retaining member (32) being disposed at the retaining position when the fastener rod (343) is disposed at one of the closed ends of each of the limiting slots (315) in the tubular portion (31) of the main body (30), the retaining member (32) being disposed at the release position when the fastener rod (343) is disposed at the other one of the closed ends of each of the limiting slots (315) in the tubular portion (31) of the main body (30).

4. The connecting device (300) as claimed in Claim 3, further **characterized in that** the fastener rod (343) is configured as a rivet.

5. The connecting device (300) as claimed in Claim 3, further **characterized by**:
a movable cylindrical pressing member (36) disposed movably within the retaining member (32), and having a pressing end (360) that is adjacent to the stop surfaces (327) of the retaining hooks (325), and a spring-receiving groove (361) formed through the pressing member (36), the fastener rod (343) extending through the spring-receiving groove (361) in the pressing member (36), the spring-receiving groove (361) extending in an axial direction of the pressing member (36) and having a first end (361A) proximate to the pressing end (360), and a second end (361B) distal from the pressing end (360); and
a coiled compression spring (363) disposed within the spring-receiving groove (361) in the pressing member (36) between the fastener rod (343) and the wall of the pressing member (36) defining the first end (361A) of the spring-receiving groove (361) in the pressing member (36) so that the pressing end (360) of the pressing member (36) presses the insert portion (11) of the retaining ring (10) against the stop surfaces (327) of the retaining hooks (325) of the retaining member (32).

6. The connecting device (300) as claimed in Claim 2, further **characterized in that** the tubular portion (31) of the main body (30) further has an open second end (312) that is opposite to the first end (311) of the tubular portion (31) of the main body (30), the retaining member (32) having a first end (323) that is formed with the retaining hooks (325), and a second end (324) disposed adjacent to and projecting outwardly of the second end (312) of the tubular portion (31) of the main body (30), the main body (30) further including a transverse rod (302) that is formed integrally with the second end (312) of the tubular portion (31) of the main body (30) at an end thereof, the biasing unit (317) being configured as a coiled torsional spring and having a first end (318) abutting against the transverse rod (302), and a second end (319) fastened to the retaining member (32).

7. The connecting device (300) as claimed in Claim 6, further **characterized in that** the second end (324) of the retaining member (32) has a wall that is formed with a radial hole (329), the second end (319) of the biasing unit (317) being inserted into the radial hole (329) in the retaining member (32).

## Patentansprüche

1. Verbindungsvorrichtung (300), welche an einem Kindersitz (900) befestigt ist, und lösbar mit einem Einfügeabschnitt (11) eines Halterings (10) verbunden ist, wobei die Verbindungsvorrichtung (300) **gekennzeichnet** wird durch:
- einen Hauptkörper (30), welcher starr an dem Kindersitz (900) befestigt ist, und einen röhrenförmigen Abschnitt (31) einschließt, welcher ein offenes erstes Ende (311) aufweist, welches mit zwei fluchtenden Gleitschlitzen (314) ausgebildet ist, von denen jeder ein geschlossenes Ende und ein offenes Ende aufweist, und wobei der Einfügeabschnitt (11) des Halterings (10) innerhalb der Gleitschlitze (314) in dem Hauptkörper (30) und benachbart zu den geschlossenen Enden der Gleitschlitze (314) in dem Hauptkörper (30) angeordnet ist;
- ein drehbares Haltebauteil (32), welches drehbar in dem Hauptkörper (30) angeordnet ist, und zwei einstückige Haltehaken (325) aufweist, von denen jeder mit einer geneigten Gleitoberfläche (326) nahe dem offenen Ende einer entsprechenden der Gleitschlitze (314) in dem Hauptkörper (30) ausgebildet ist, und eine Stoppoberfläche (327) nahe dem geschlossenen Ende des entsprechenden einen der Gleitschlitze (314) in den Hauptkörper (30), wobei das Haltebauteil (32) in einer Halteposition angeordnet ist, in welcher die Haltehaken (325) mit den Gleitschlitzen (314) in dem Hauptkörper (30) fluchten, so dass der Einfügeabschnitt (11) des Halterings (10) innerhalb der geschlossenen Enden der Gleitschlitze (314) begrenzt wird durch die Stoppoberflächen (327) der Haltehaken (325) des Haltebauteils (32), wobei das Haltebauteil (32) relativ zu dem Hauptkörper (30) zu einer Freigabeposition drehbar ist, wo die Haltehaken (325) des Haltebauteils (32) aus der fluchtenden Anordnung mit den Gleitschlitzen (314) in dem Hauptkörper (30) entfernt werden, um dem Einfügeabschnitt (11) des Halterings (10) das Passieren durch die Haltehaken (325) des Haltebauteils (32) innerhalb der Gleitschlitze (314) des Hauptkörpers (30) zu erlauben; und
- eine Ausrichtungseinheit (317) zum Ausrichten des Haltebauteils (32) in der Halteposition, wobei der Einfügeabschnitt (11) des Halterings (10) die geneigten Führungsoberflächen (326) der Haltehaken (325) kontaktieren und gegen die Ausrichtungswirkung der Ausrichtungseinheit (317) drücken, um damit das Haltebauteil (32) in die Freigabeposition zu bewegen, wenn der Einfügeabschnitt (11) in die Gleitschlitze (314) in dem Hauptkörper (30) eingefügt sind, wonach die Ausrichtungseinheit (317) das Haltebauteil (32) in die Halteposition dreht, um den Einfügeabschnitt (11) des Halterings (10) innerhalb der geschlossenen Enden der Gleitschlitze (314) des röhrenförmigen Abschnitts (31) des Hauptkörpers (30) zu begrenzen.

2. Verbindungsvorrichtung (300) nach Anspruch 1, **dadurch gekennzeichnet, dass** der röhrenförmige Abschnitt (31) des Hauptkörpers (30) und des Haltebauteils (32) als ein kreisförmiges Rohr geformt sind, wobei das Haltebauteil (32) innerhalb des röhrenförmigen Abschnitts (31) des Hauptkörpers (30) angeordnet ist.

3. Verbindungsvorrichtung (300) nach Anspruch 2, **dadurch gekennzeichnet, dass** der röhrenförmige Abschnitt (31) des Hauptkörpers (30) mit zwei fluchtenden begrenzenden Schlitzen (315) ausgebildet ist, wobei sich jeder der begrenzenden Schlitze (315) entlang einer Umfangsrichtung des röhrenförmigen Abschnitts (31) des Hauptkörpers (30) erstreckt, und zwei geschlossene Enden aufweist, wobei die Verbindungsvorrichtung (300) weiterhin einen Rotationsring (34) einschließt, welcher drehbar den röhrenförmigen Abschnitt des Hauptkörpers (30) umhüllt, und eine Befestigungsstange (343), welche sich durch den begrenzenden Schlitz (315) in dem röhrenförmigen Abschnitt (31) des Hauptkörpers (30) erstreckt, und zwei Enden aufweist, die jeweils starr mit dem Rotationsring (34) auf dem Haltebauteil (32) verbunden sind, wobei sich das Haltebauteil (32) in der Halteposition befindet, wenn die Befestigungsstange (343) an einem der geschlossenen Enden von jedem der begrenzenden Schlitze (315) in dem röhrenförmigen Abschnitt (31) des Hauptkörpers (30) angeordnet ist, und wobei sich das Haltebauteil (32) in der Freigabeposition befindet, wenn die Befestigungsstange (343) an dem anderen Ende der geschlossenen Enden von jedem der begrenzenden Schlitze (315) in dem röhrenförmigen Abschnitt (31) des Hauptkörpers (30) angeordnet ist.

4. Verbindungsvorrichtung (300) nach Anspruch 3, **dadurch** weiterhin **gekennzeichnet, dass** die Befestigungsstange (343) als eine Niete gestaltet ist.

5. Verbindungsvorrichtung (300) nach Anspruch 3, **dadurch gekennzeichnet, dass**:
- ein bewegliches zylindrisches Pressbauteil (36) beweglich innerhalb des Haltebauteils (32) angeordnet ist, und ein Pressende (360) aufweist, welches zu den Stoppoberflächen (327) der Haltehaken (325) benachbart ist, und eine Federaufnahmenut (361) durch das Pressbauteil (36) gebildet ist, wobei sich die Befestigungsstange (343) durch die Federaufnahmenut (361) in dem Pressbauteil (36) erstreckt, wobei sich die Federaufnahmenut (361) in einer axialen Richtung des Pressbauteils (36) erstreckt, und ein erstes Ende (361A) nahe dem Pressende (360) aufweist, und ein zweites Ende (361B) fern des Pressendes (360) aufweist; und
- eine gewundene Druckfeder (363) innerhalb der Federaufnahmenut (361) in dem Pressbauteil (36) zwischen der Befestigungsstange (343) und der Wand des Pressbauteils (36), welches das erste Ende (361A) der Federaufnahmenut (361) in dem Pressbauteil (36) definiert, so dass das Pressende (360) des Pressbauteils (36) den Einfügeabschnitt (11) des Halterings (10) gegen die Stoppoberflächen (327) der Haltehaken (325) des Haltebauteils (32) drückt, angeordnet ist.

6. Verbindungsvorrichtung (300) nach Anspruch 2, **dadurch** weiterhin **gekennzeichnet, dass** der röhrenförmige Abschnitt (31) des Hauptkörpers (30) weiterhin ein offenen zweites Ende (312) aufweist, welches dem ersten Ende (311) des röhrenförmigen Abschnitts (31) des Hauptkörpers (30) gegenüberliegt, wobei das Haltebauteil (32) ein erstes Ende (323) aufweist, welches mit den Haltehaken (325) gebildet ist, und ein zweites Ende (324) benachbart zu und auswärts hervorstehend von dem zweiten Ende (312) des röhrenförmigen Abschnitts (31) des Hauptkörpers (30) angeordnet ist, wobei der Hauptkörper (30) weiterhin eine Querstange (302) einschließt, welche einstückig mit dem zweiten Ende (312) des röhrenförmigen Abschnitts (31) des Hauptkörpers (30) und einem Ende davon ausgebildet ist, wobei die Ausrichtungseinheit (317) als eine gewickelte Torsionsfeder gestaltet ist, und ein erstes Ende (318) aufweist, welches gegen die Querstange (302) stößt, und ein zweites Ende (319), welches an dem Haltebauteil (32) befestigt ist.

7. Verbindungsvorrichtung (300) nach Anspruch 6, **dadurch** weiterhin **gekennzeichnet, dass** das zweite Ende (324) des Haltebauteils (32) eine Wand aufweist, welche mit einem radialen Loch (329) ausgebildet ist, wobei das zweite Ende (319) der Ausrichtungseinheit (317) in das radiale Loch (329) in dem Haltebauteil (32) eingefügt ist.

## Revendications

1. Dispositif de fixation (300) monté sur un siège pour enfant (900) et relié de façon amovible à une partie d'insert (11) d'un anneau d'ancrage (10), le dispositif de fixation (300) étant **caractérisé par** :
un corps principal (30) monté de manière fixe sur le siège pour enfant (900) et comprenant une partie tubulaire (31) qui comporte une première extrémité ouverte (311) qui est formée avec deux mortaises alignées (314), chacun d'elles ayant une extrémité fermée et une extrémité ouverte, la partie d'insert (11) de l'anneau d'ancrage (10) étant disposée à l'intérieur des mortaises (314) dans le corps principal (30) et adjacente aux extrémités fermées des mortaises (314) dans le corps principal (30) ;
un élément d'ancrage rotatif (32) disposé en rotation dans le corps principal (30) et comportant deux crochets d'ancrage d'un seul tenant (325), chacun d'eux étant formé avec une surface de guidage inclinée (326) proche de l'extrémité ouverte d'une mortaise correspondante des mortaises (314) dans le corps principal (30), et une surface de butée (327) proche de l'extrémité fermée de la mortaise correspondante des mortaises (314) dans le corps principal (30), l'élément d'ancrage (32) étant disposé au niveau d'une position d'ancrage, où les crochets d'ancrage (325) sont alignés avec les mortaises (314) dans le corps principal (30) de sorte que la partie d'insert (11) de l'anneau d'ancrage (10) est confinée à l'intérieur des extrémités fermées des mortaises (314) par les surfaces de butée (327) des crochets d'ancrage (325) de l'élément d'ancrage (32), l'élément d'ancrage (32) pouvant être mis en rotation par rapport au corps principal (30) jusqu'à une position de libération, où les crochets d'ancrage (325) de l'élément d'ancrage (32) ne sont plus alignés avec les mortaises (314) dans le corps principal (30) de façon à permettre à la partie d'insert (11) de l'anneau d'ancrage (10) de passer à travers les crochets d'ancrage (325) de l'élément d'ancrage (32) à l'intérieur des mortaises (314) dans le corps principal (30) ; et
une unité de sollicitation (317) pour solliciter l'élément d'ancrage (32) vers la position d'ancrage, la partie d'insert (11) de l'anneau d'ancrage (10) étant en contact avec et poussant les surfaces de guidage inclinées (326) des crochets d'ancrage (325) contre l'action de sollicitation de l'unité de sollicitation (317) pour déplacer de ce fait l'élément d'ancrage (32) vers la position de libération lorsque la partie d'insert (11) est insérée dans les mortaises (314) dans le corps principal (30), après quoi l'unité de sollicitation (317) fait tourner l'élément d'ancrage (32) jusqu'à la position d'ancrage de façon à confiner la partie d'insert (11) de l'anneau d'ancrage (10) à l'intérieur des extrémités fermées des mortaises (314) de la partie tubulaire (31) du corps principal (30).

2. Dispositif de fixation (300) selon la revendication 1, **caractérisé en ce que** chacun de la partie tubulaire (31) du corps principal (30) et de l'élément d'ancrage (32) est formé comme un tube circulaire, l'élément d'ancrage (32) étant disposé à l'intérieur de la partie tubulaire (31) du corps principal (30).

3. Dispositif de fixation (300) selon la revendication 2, **caractérisé en outre en ce que** la partie tubulaire (31) du corps principal (30) est formée avec deux fentes de limitation alignées (315), chacune des fentes de limitation (315) s'étendant le long d'une direction circonférentielle de la partie tubulaire (31) du corps principal (30) et ayant deux extrémités fermées, le dispositif de fixation (300) comprenant en outre un anneau rotatif (34) qui est manchonné en rotation autour de la partie tubulaire (31) du corps principal (30), et une tige de fixation (343) s'étendant à travers la fente de limitation (315) dans la partie tubulaire (31) du corps principal (30) et ayant deux extrémités qui sont reliées de manière respective et de façon fixe à l'anneau rotatif (34) et à l'élément d'ancrage (32), l'élément d'ancrage (32) étant disposé au niveau de la position d'ancrage lorsque la tige de fixation (343) est disposée au niveau d'une des extrémités fermées de chacune des fentes de limitation (315) dans la partie tubulaire (31) du corps principal (30), l'élément d'ancrage (32) étant disposé au niveau de la position de libération lorsque la tige de fixation (343) est disposée au niveau de l'autre des extrémités fermées de chacune des fentes de limitation (315) dans la partie tubulaire (31) du corps principal (30).

4. Dispositif de fixation (300) selon la revendication 3, **caractérisé en outre en ce que** la tige de fixation (343) a une configuration de rivet.

5. Dispositif de fixation (300) selon la revendication 3, **caractérisé en outre par** :
un élément de pression cylindrique mobile (36) disposé de façon mobile à l'intérieur de l'élément d'ancrage (32), et comportant une extrémité de pression (360) qui est adjacente aux surfaces de butée (327) des crochets d'ancrage (325), et une rainure de réception de ressort (361) formée à travers l'élément de pression (36), la tige de fixation (343) s'étendant à travers la rainure de réception de ressort (361) dans l'élément de pression (36), la rainure de réception de ressort (361) s'étendant dans la direction axiale de l'élément de pression (36) et ayant une première extrémité (361A) proche de l'extrémité de pression (360), et une seconde extrémité (361B) distante de l'extrémité de pression (360) ; et
un ressort de compression à enroulement (363) disposé à l'intérieur de la rainure de réception de ressort (361) dans l'élément de pression (36) entre la tige de fixation (343) et la paroi de l'élément de pression (36) définissant la première extrémité (361A) de la rainure de réception de ressort (361) dans l'élément de pression (36) de sorte que l'extrémité de pression (360) de l'élément de pression (36) presse la partie d'insert (11) de l'anneau d'ancrage (10) contre les surfaces de butée (327) des crochets d'ancrage (325) de l'élément d'ancrage (32).

6. Dispositif de fixation (300) selon la revendication 2, **caractérisé en outre en ce que** la partie tubulaire (31) du corps principal (30) comporte en outre une seconde extrémité ouverte (312) qui est en face de la première extrémité (311) de la partie tubulaire (31) du corps principal (30), l'élément d'ancrage (32) comportant une première extrémité (323) qui est formée avec les crochets d'ancrage (325), et une seconde extrémité (324) disposée de façon adjacente et en saillie vers l'extérieur à la seconde extrémité (312) de la partie tubulaire (31) du corps principal (30), le corps principal (30) comprenant en outre une tige transversale (302) qui est formée d'un seul tenant avec la seconde extrémité (312) de la partie tubulaire (31) du corps principal (30) au niveau d'une de ses extrémités, l'unité de sollicitation (317) étant configurée comme un ressort de torsion à enroulement et comportant une première extrémité (318) en butée contre la tige transversale (302) et une seconde extrémité (319) attachée à l'élément d'ancrage (32).

7. Dispositif de fixation (300) selon la revendication 6, **caractérisé en outre en ce que** la seconde extrémité (324) de l'élément d'ancrage (32) possède une paroi qui est formée avec un trou radial (329), la seconde extrémité (319) de l'unité de sollicitation (317) étant insérée dans le trou radial (329) dans l'élément d'ancrage (32).
